# EUROPÄISCHE PATENTSCHRIFT

(11) **EP 3 878 090 B1**
(45) Veröffentlichungstag und Bekanntmachung des Hinweises auf die Patenterteilung: **12.03.2025**
(21) Anmeldenummer: 20721180.6
(22) Anmeldetag: 21.04.2020
(51) Int. Cl.: H02P 27/06, H02P 6/08, H02P 29/032, H02M 7/00, H02M 5/00, H02H 7/00

(54) **SYSTEM UMFASSEND EINE KOMPONENTENKODIERUNG**
SYSTEM WITH A COMPONENT CODING
SYSTÈME AVEC UN CODAGE DE COMPOSANTS

(30) Priorität: 27.05.2019 DE 102019114058
(43) Veröffentlichungstag der Anmeldung: 15.09.2021
(73) Patentinhaber: ebm-papst Mulfingen GmbH & Co. KG, 74673 Mulfingen (DE)
(72) Erfinder: BÜRKERT, Martin, 74677 Dörzbach-Hohebach (DE); KAMMLEITER, Steffen, 97959 Assamstadt (DE); SCHROTH, Sebastian, 74635 Kupferzell (DE); SCHNEIDER, Alex, 74653 Künzelsau (DE); WECKERT, Marco, 97980 Bad Mergentheim (DE)
(74) Vertreter: Staeger & Sperling Partnerschaftsgesellschaft mbB
(86) Internationale Anmeldenummer: PCT/EP2020/061057
(87) Internationale Veröffentlichungsnummer: WO 2020/239326

(56) Entgegenhaltungen:
- EP-A1- 0 304 574
- EP-A1- 1 246 345
- DE-U1- 29 620 516
- US-B1- 6 555 984

## Beschreibung

Die Erfindung betrifft ein System bestehend aus einer Zentralelektronik ausgebildet zum bestimmungsgemäßen Anschluss und Betrieb von unterschiedlich kodierten Elektromotoren auswählbar aus einer Anzahl bestimmungsgemäß anschließbarer Elektromotoren unterschiedlicher Charakteristik oder unterschiedlicher Leistungsklassen.

In der Praxis besteht ein Bedürfnis danach eine Anbindung von unterschiedlichen Motoren bzw. Ventilatoren unterschiedlicher Leistungsklassen an eine zentrale- oder dezentrale Elektronik, die in unterschiedlichen Systemkonfigurationen die Kommutierung und Überwachung von mehreren Motoren unterschiedlicher Art übernimmt. Problematisch ist dabei, dass je nach Anwendungsfall ein Ventilator oder Motor mit einer anderen Leistungsklasse oder einer anderen Motorcharakteristik an die Schnittstelle der Zentralelektronik angeschlossen werden muss und die Elektronik nicht ohne weiteres die unterschiedlichen Motortypen erfassen kann. Die Elektromotoren können in der Endausbaustufe als Ventilatoren, Pumpen, Schrittmotoren und Kompressoren implementiert sein.

Im Stand der Technik wird diese Problematik auf unterschiedliche, teilweise sehr aufwändige Art gelöst. Es gibt bereits Lösungen, bei denen mechanische Kodierungen oder elektrische Schaltungen dazu verwendet werden, um entsprechend einer Gegenkodierung einen bestimmten Schaltungszustand herbeizuführen.

So werden im Stand der Technik die angeschlossenen Geräte auch über eine Identifikation der Anbaukomponenten detektiert, wobei dies über die Bestimmung von elektrischen Parametergrößen, wie z.B. den Widerstands- und den Induktivitätswert oder durch eine bestimmte identifizierende Signalabfolge eines aktiven Elementes erfolgt.

Wird eine solche Zentralelektronik auch für den Überlastschutz und die Kommutierung von mehreren Motoren benötigt, die sich in den elektrischen Parametern und damit auch in den Leistungsgrenzen unterscheiden, so muss der überwachende Schaltungsbereich auf der Elektronik in der Abschaltschwelle der Stromamplitude angepasst werden, was mit den im Stand der Technik bekannten Lösungen nicht ohne weiteres möglich ist.

Die bekannten Lösungen verursachen hohe Verwaltungskosten durch entstehende Variantenvielfalt in der Endgeräteausführung infolge von erforderlichen Bestückungsoptionen auf der Elektronikseite und Leiterplatte je nach Leistungsklasse und Charakteristik. Zur Realisierung eines Überlastschutzes sind aufwändige gerätespezifische Anpassungen auf der Elektronik durch Bestückungsvariation in einer Auswertungsbeschaltung erforderlich. Ferner bestehen hohe Anforderungen an eine Auswertung eines Erkennungsmittels über die Software (Class-B) und es werden typischerweise Zuordnungstabellen für die Ausführung von Folgeaktionen oder Funktionen in Abhängigkeit von Widerstandwerten in dem Auswertesystem benötigt.

Druckschriftlicher Stand der Technik im vorliegenden technischen Gebiet, welcher den Oberbegriff des Anspruchs 1 widerspiegelt, ist in den Dokumenten EP 0 304 574 A1, DE 296 20 516 U1 und US 6 555 984 B1 offenbart.

Der Erfindung liegt deshalb die Aufgabe zugrunde, vorbesagte Nachteile zu überwinden und eine Lösung vorzuschlagen, die neben der Möglichkeit einer variablen Anschlussmöglichkeit verschiedener Motoren unterschiedlicher Leistungsklassen auch eine motorenspezifische Anpassung eines Überstromschutzes ermöglicht.

Diese Aufgabe wird durch die Merkmalskombination gemäß Patentanspruch 1 gelöst.

Eine Grundidee der vorliegenden Erfindung besteht in der Aufteilung der Gesamtschutzschaltung in einen Neben- und Hauptschutzkreis, wobei der Hauptschutzkreis in der Zentralelektronik implementiert wird und damit der feste Bestandteil im Schutzkonzept der Schutzschaltung darstellt. Ein jeweils individueller Nebenschutzkreis, bevorzugt durch eine passive Komponente in Form eines Kodierelements, wie zum Beispiel mittels eines elektrischen Widerstands, realisiert, wird in seiner abschaltwertbestimmenden Aufgabe in die zu kommutierende Einheit eingebracht. Eine solche Nebenschutzschaltung ist besonders dadurch gekennzeichnet, dass diese in dem Anschlussstecker oder der Motoranschlussleitung des Elektromotors, wie z. B. des Ventilators oder der Pumpe integriert ist.

Erfindungsgemäß wird hierzu ein System vorgeschlagen, bestehend aus einem Steuergerät mit einer Zentralelektronik, ausgebildet zum bestimmungsgemäßen Anschluss und Betrieb von unterschiedlich kodierten Elektromotoren mit unterschiedlicher Motorcharakteristik und/oder Leistungsklassen an einem Geräteanschluss des Steuergerätes und wenigstens einem Elektromotor auswählbar aus einer Anzahl n bestimmungsgemäß anschließbarer Elektromotoren, wobei jeder bestimmungsgemäß anschließbare Elektromotor ein Kodierelement aufweist und wobei die Zentralelektronik eine vorzugsweise elektronische Kodiererfassungseinrichtung zur Erkennung der Motorcharakteristik und/oder dessen Leistungsklasse des jeweils aktuell angeschlossenen Elektromotors mittels dessen Kodierelement aufweist.

In einer bevorzugten Ausgestaltung des erfindungsgemäßen Systems ist vorgesehen, dass jeder Elektromotor eine Motoranschlussleitung mit einem Anschlussstecker zum Einstecken in den Geräteanschluss des Steuergeräts aufweist und das jeweilige Kodierelement in der Motoranschlussleitung oder dem Anschlussstecker integriert ist.

Weiter vorteilhaft ist es, wenn das jeweilige Kodierelement wenigstens ein elektrisches Bauelement umfasst oder ist, welches spezifisch für den jeweiligen Motortyp ist, wie zum Beispiel einen elektrischen Widerstand.

Damit die benötigten Strombegrenzungsschwellen für einen sich selbstkonfigurierbaren Überlastschutz für den jeweiligen Elektromotor richtig eingestellt werden, wird das besagte Kodierelement in die Motoranschlussverbindung integriert, so dass nach dem Einstecken des Anschlusssteckers in die Gerätebuchse der Zentralelektronik das für den Elektromotor verwendete Kodierelement mit der Auswerteschaltung der Zentralelektronik in eine für den Signalfluss geschlossene Verbindung gebracht wurde. In die Anschlussleitung kann zum Beispiel über eine Klemm- oder Lötverbindung das Kodierelement, welches sich in seiner Charakteristik, in Abhängigkeit der Leistungsklasse oder Motorcharakteristik unterscheidet, angebracht sein. Bevorzugt wird das Kodierelement mit einer Isolation berührsicher abgeschlossen und an die Kontaktierung des Anschlusssteckers mit der Anschlussleitung angeschlossen.

In einer weiteren bevorzugten Ausgestaltung des erfindungsgemäßen Systems ist vorgesehen, dass die Kodiererfassungseinrichtung auf der Zentralelektronik eine elektrische Auswerteschaltung umfasst, die ausgebildet ist, eine motorspezifische Strombegrenzung abhängig vom angeschlossenen Elektromotor bzw. dem für diesen Motor detektierten Kodierelement zu verwenden.

Erfindungsgemäß weist die Kodiererfassungseinrichtung eine Strombegrenzungsschaltung auf, die abhängig von dem detektierten Kodierelement eine Strombegrenzung verwendet, welche einen Überstrom oberhalb der Strombegrenzung verhindert und maximal einen Strom bis zu diesem Wert zulässt. So kann auf einfache Weise sichergestellt werden, dass abhängig vom jeweils angeschlossenen Elektromotor oder Ventilator automatisch die korrekte motorenspezifische Strombegrenzung für diesen Motor aktiviert ist.

Erfindungsgemäß ist die Strombegrenzung bei einem angeschlossenen Elektromotor dadurch realisiert, dass Signalkontakte der Kodiererfassungseinrichtung über wenigstens eine Leitungsverbindung aufweisend das Kodierelement in eine Signalflusschleife gebracht sind und mittels eines Komparators der Schutzschaltung des Hauptschutzkreis eine entsprechende Abschaltschwelle eingestellt wird.

Auf diese Weise ist eine Überstromschutzeinrichtung realisiert, bestehend aus wenigstens der Zentralelektronik und einem Elektromotor mit einem Hauptschutzkreis und einem Nebenschutzkreis, wobei der Hauptschutzkreis wenigstens eine Auswerteschaltung zur Auswertung eines Kodierelements aufweist und in der Zentralelektronik realisiert ist, während der Nebenschutzkreis davon getrennt in der Motoranschlussleitung oder einem an dieser Leitung angeschlossenen Anschlussstecker, aufweisend ein Kodierelement realisiert ist.

Anders ausgedrückt wird durch das Einstecken des Motoranschlusssteckers in die Zentralelektronik, der Nebenschutzkreises jeweils mit dem Hauptschutzkreis in eine geschlossene Schutzkreisverbindung gebracht. Die Idee der Erfindung lässt sich besonders effizient bei EC-Motoren einsetzen, die mit einer Kommutierung der Zentralelektronik kommutierbar sind. Weiter bevorzugt ist die Idee der Erfindung für bestimmungsgemäß anschließbare Elektromotoren, die jeweils ein integraler Antrieb eines Gerätes, insbesondere eines Ventilators, einer Pumpe, eines Kompressors oder einer klimatechnischen Einrichtung darstellen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine schematische Übersicht eines Ausführungsbeispiels eines erfindungsgemäßen Systems,
- Fig. 2: eine schematische Ansicht einer Schnittstelle einer Zentralelektronik,
- Fig. 3: ein beispielhaftes Kodierelement in einer Motoranschlussleitung und
- Fig. 4: eine Auswerteschaltung zur Bestimmung des angeschlossenen Motortyps.

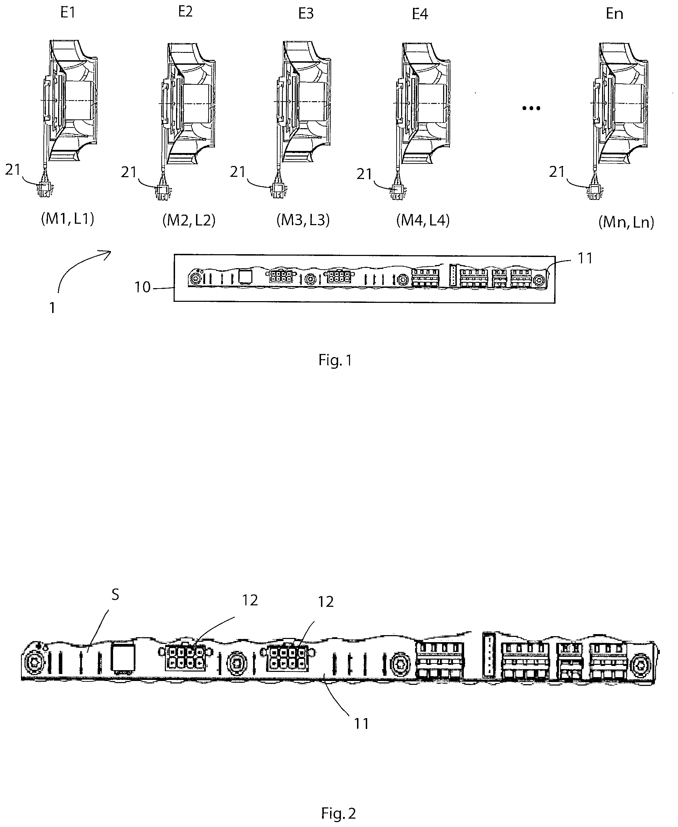

Im Folgenden wird die Erfindung mit Bezug auf die Figuren 1 bis 4 näher erläutert, wobei gleiche Bezugszeichen auf gleiche strukturelle und/oder funktionale Merkmale hinweisen.

Die Figur 1 zeigt eine schematische Übersicht eines Ausführungsbeispiels eines erfindungsgemäßen Systems 1. Das gezeigte System 1 besteht aus wenigstens einer Paarung aus dem Steuergerät 10 mit der Zentralelektronik 11 und einem der Elektromotoren En, auswählbar aus der Anzahl der gezeigten n unterschiedlich kodierten Elektromotoren E1,..., En mit unterschiedlicher Motorcharakteristik M1,... Mn und/oder Leistungsklassen L1,...,Ln. Die Elektromotoren En verfügen jeweils über einen Anschlussstecker 21 zum Anschließen an einem Geräteanschluss 12 des Steuergerätes 10 der Zentralelektronik 11.

Mit dem Konzept der vorliegenden Erfindung kann daher ohne manuelle Anpassung der Steuerung jeder der gezeigten Elektromotoren En an den Geräteanschlüssen 12 des Steuergerätes 10 einer Zentralelektronik 11, wie in der Figur 2 gezeigt, angeschlossen werden.

In der Figur 2 findet sich eine schematische Ansicht einer Schnittstelle S einer Zentralelektronik 11 mit den zwei Geräteanschlüssen 12 zum Anschluss je eines Elektromotors En. Daneben sind weitere Schnittstellen zum Herstellen weiterer Verbindungen mit anderen Einrichtungen dargestellt.

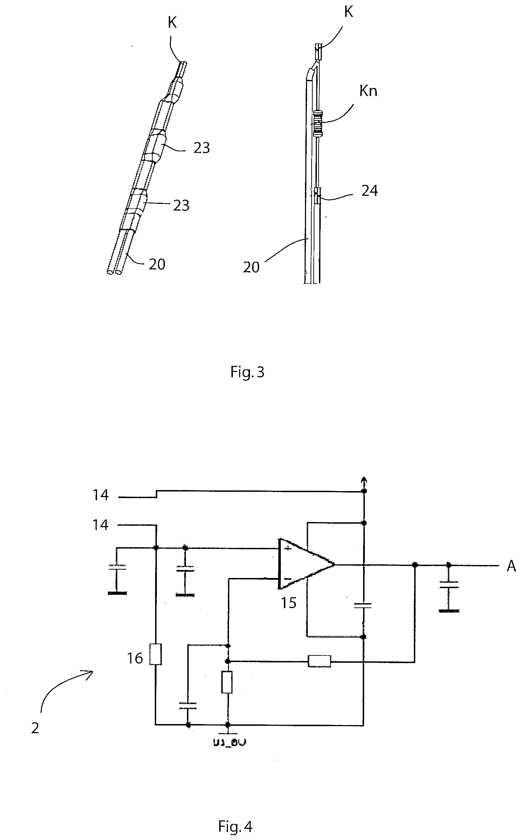

Die Geräteanschlüsse 12 verfügen über wenigstens zwei Signalanschlüsse zur Verbindung mit den Signalkontakte 14 der Kodiererfassungseinrichtung 2 umfassend die Auswerteschaltung, die in der Figur 4 gezeigt ist.

Über diese Signalkontaktanschlüsse 14 wird eine Leitungsverbindung aufweisend das Kodierelement Kn des angeschlossenen Elektromotors En in eine Signalflussschleife gebracht und mittels des Komparators 15 eine entsprechende Abschaltschwelle für den an dem jeweiligen Geräteanschlüssen 12 angeschlossenen Elektromotors En für dessen Leistungsklasse eingestellt.

Nach dem Anschluss des Anschlussteckers 21 an die Schnittstelle der Zentralelektronik 11 der Figur 2 werden die bis dahin Schaltungstechnisch offenen Signalkontaktanschlüsse 14 über das Kodierelement Kn geschlossen und es wird mithilfe des weiteren Widerstandes 16 die benötigte Abschaltschwelle entsprechend des verwendeten Ventilator-Typs für den Komparator 15 eingestellt. Das Ausgangsignal A der Auswerteschaltung nach Abb. 4 wird als Wechselsignal für eine sichere Abschaltung der Kommutierungsendstufe verwendet.

In der Figur 3 ist eine beispielhafte Implementierung eines Kodierelements Kn gezeigt. Jeder der gezeigten bestimmungsgemäß anschließbare Elektromotoren E1,..., En aus der Figur 1 weist ein individuelles (für diesen Motortyp spezifisches) Kodierelement Kn auf, welches in die Motoranschlussleitung 20 integriert ist. Am Anschlussstecker 21 werden die beiden Enden des Kabels 20 aufgenommen wird. Um das Kodierelement Kn herum wird eine Isolierung 23 angebracht, wie dies schematisch in der linken Ansicht der Figur 3 gezeigt ist. Die Verbindung des Kodierelements Kn kann dabei über eine der herkömmlichen Anschlusstechniken mit z. B. einer Löt- oder Schneidklemmverbindung 24 hergestellt sein, die ebenfalls von einer Isolierung 23 zur Herstellung einer Berührungssicherheit umgeben wird, wobei betreffend der Ausbildung der Isolierung einschlägige Vorschriften der Niederspannungskoordination Berücksichtigung finden.

Mit der in der Figur 4 gezeigten Auswerteschaltung wurde eine motorspezifische Strombegrenzung abhängig vom angeschlossenen Elektromotor En realisiert, die abhängig von dem detektierten Kodierelement Kn eine dafür bestimmte Strombegrenzung verwendet, welche einen Überstrom oberhalb der Strombegrenzung verhindert.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Als weiterer vorteilhafter Effekt lässt sich bei einem Kabelbruch in der Anschlussleitung so die Begrenzungsschwelle auf "Null" setzen und damit die Kommutierungsstufe abschalten. Ferner haben Alterungseffekte der Kontaktübergänge keinen nennenswerten Einfluss auf die funktionale Sicherheit des Gerätes. Ferner werden für die unterschiedlichen zu kommutierenden Komponenten, die den Nebenschutzkreis beinhalten, keine eigene Kommutierungselektronik benötigt.

## Patentansprüche

1. System (1) bestehend aus
a. einem Steuergerät (10) mit einer Zentralelektronik (11) ausgebildet zum bestimmungsgemäßen Anschluss und Betrieb von unterschiedlich kodierten Elektromotoren (En) mit unterschiedlicher Motorcharakteristik (Mn) und/oder Leistungsklassen (Ln) an einem Geräteanschluss (12) des Steuergerätes (10) und
b. wenigstens einem Elektromotor (En) auswählbar aus einer Anzahl n bestimmungsgemäß anschließbarer Elektromotoren (En), wobei jeder bestimmungsgemäß anschließbare Elektromotor (En) ein Kodierelement (Kn) aufweist,
c. wobei die Zentralelektronik (11) eine Kodiererfassungseinrichtung (2) zur Erkennung der Motorcharakteristik (Mn) und/oder dessen Leistungsklasse (Ln) des jeweils aktuell angeschlossenen Elektromotors (En) mittels dessen Kodierelement (Kn) aufweist,
**dadurch gekennzeichnet, dass** die Kodiererfassungseinrichtung (2) eine Strombegrenzungsschaltung aufweist, die abhängig von dem detektierten Kodierelement (Kn) eine Strombegrenzung verwendet, welche einen Überstrom oberhalb der Strombegrenzung verhindert, wobei die Strombegrenzung bei einem angeschlossenen Elektromotor (En) dadurch realisiert ist, dass Signalkontakte (14) der Kodiererfassungseinrichtung (2) über wenigstens eine Leitungsverbindung aufweisend das Kodierelement (Kn) in eine Signalflusschleife gebracht sind und mittels eines Komparators (15) eine entsprechende Abschaltschwelle eingestellt wird.

2. System (1) gemäß Anspruch 1, **dadurch gekennzeichnet, dass** jeder Elektromotor (En) eine Motoranschlussleitung (20) mit einem Anschlussstecker (21) zum Einstecken in den Geräteanschluss (12) des Steuergeräts (10) aufweist und das jeweilige Kodierelement (Kn) in der Motoranschlussleitung (20) oder dem Anschlussstecker (21) integriert ist.

3. System (1) gemäß Anspruch 1 oder 2, **dadurch gekennzeichnet, dass** das Kodierelement (Kn) wenigstens ein elektrisches Bauelement umfasst oder ist.

4. System (1) gemäß Anspruch 3, **dadurch gekennzeichnet, dass** das Kodierelement (Kn) wenigstens einen elektrischer Widerstand umfasst oder ein elektrischer Widerstand ist.

5. System (1) gemäß einem der vorhergehenden Ansprüche, **dadurch gekennzeichnet, dass** die Kodiererfassungseinrichtung (2) eine elektrische Auswerteschaltung umfasst, die ausgebildet ist, eine motorspezifische Strombegrenzung abhängig vom angeschlossenen Elektromotor (En) zu verwenden.

6. System (1) gemäß einem der vorhergehenden Ansprüche, **dadurch gekennzeichnet, dass** jeder Elektromotor (En) ein EC-Motor darstellt, der von einer Kommutierung der Zentralelektronik (11) kommutierbar ist.

7. System (1) gemäß einem der vorhergehenden Ansprüche, **dadurch gekennzeichnet, dass** jeder bestimmungsgemäß anschließbare Elektromotor (En) jeweils ein integraler Antrieb eines Gerätes, insbesondere eines Ventilators, einer Pumpe, eines Kompressors oder einer klimatechnischen Einrichtung ist.

8. System (1) gemäß einem der vorhergehenden Ansprüche, **dadurch gekennzeichnet, dass** eine Überstromschutzeinrichtung des Systems bestehend aus wenigstens der Zentralelektronik (11) und einem Elektromotor (En) aus einem Hauptschutzkreis und einem Nebenschutzkreis gebildet ist, wobei der Hauptschutzkreis wenigstens eine Auswerteschaltung zur Auswertung eines Kodierelements (Kn) aufweist und in der Zentralelektronik (11) realisiert ist, während der Nebenschutzkreis davon getrennt in der Motoranschlussleitung oder einem an dieser angeschlossenen Anschlussstecker, aufweisend ein Kodierelement (Kn) realisiert ist.

## Claims

1. A system (1) comprising
a. a control device (10) with central electronics (11) designed for the intended connection and operation of differently coded electric motors (En) with different motor characteristics (Mn) and/or power classes (Ln) to a device connection (12) of the control device (10) and
b. at least one electric motor (En) selectable from a number n of electric motors (En) which can be connected as intended, wherein each electric motor (En) which can be connected as intended has a coding element (Kn),
c. wherein the central electronics (11) have a coding capture device (2) for recognizing the motor characteristics (Mn) and/or the power class (Ln) of the respectively currently connected electric motor (En) by means of the coding element (Kn) thereof.
**characterized in that**
the coding capture device (2) has a current limitation circuit which uses a current limitation depending on the detected coding element (Kn), which prevents an over-current above the current limitation, wherein the current limit for a connected electric motor (En) is implemented **in that** signal contacts (14) of the coding capture device (2) are incorporated into a signal flow loop via at least one line connection having the coding element (Kn), and a corresponding switch-off threshold is set by means of a comparator (15).

2. The system (1) according to claim 1, **characterized in that** each electric motor (En) has a motor connection line (20) with a connection plug (21) for plugging into the device connection (12) of the control device (10), and the respective coding element (Kn) is integrated into the motor connection line (20) or the connection plug (21).

3. The system (1) according to claim 1 or 2, **characterized in that** the coding element (Kn) comprises or is at least one electric structural element.

4. The system (1) according to claim 3, **characterized in that** the coding element (Kn) comprises at least one electrical resistor or is an electrical resistor.

5. The system (1) according to any of the preceding claims, **characterized in that** the coding capture device (2) comprises an electrical evaluation circuit which is designed to use a motor-specific current limitation as a function of the electric motor (En) connected.

6. The system (1) according to any of the preceding claims, **characterized in that** each electric motor (En) represents an EC motor which can be commutated through commutation of the central electronics (11).

7. The system (1) according to any of the preceding claims, **characterized in that** each electric motor (En) which can be connected as intended is an integral drive of a device, particularly of a fan, a pump, a compressor, or an HVAC device.

8. The system (1) according to any of the preceding claims, **characterized in that** an over-current protection device of the system comprising at least the central electronics (11) and an electric motor (En) is formed from a primary protection circuit and an auxiliary protection circuit, wherein the primary protection circuit has at least one evaluation circuit for evaluating a coding element (Kn) and is implemented in the central electronics (11), while the auxiliary protection circuit is implemented separately therefrom in the motor connection line or a connection plug connected to said line, the connection plug having a coding element (Kn).

## Revendications

1. Système (1) composé par
a. un dispositif de commande (10) avec une électronique centrale (11) conçu pour le raccordement et le fonctionnement prévus de moteurs électriques (En) codés différemment avec des caractéristiques de moteur (Mn) et/ou des classes de puissance (Ln) différentes sur un connecteur de dispositif (12) du dispositif de commande (10) et
b. au moins un moteur électrique (En) sélectionnable parmi un nombre n de moteurs électriques (En) connectables comme prévu, chaque moteur électrique (En) connectable comme prévu comportant un élément de codage (Kn),
c. dans lequel l'électronique centrale (11) présente un dispositif de détection de codeur (2) pour détecter les caractéristiques de moteur (Mn) et/ou les classes de puissance (Ln) du moteur électrique (En) actuellement connecté au moyen de son élément de codage (Kn),
**caractérisé en ce que** le dispositif de détection de codeur (2) présente un circuit de limitation de courant qui, en fonction de l'élément de codage (Kn) détecté, utilise une limitation de courant qui empêche une surintensité au-dessus de la limitation de courant, dans lequel la limitation de courant est réalisée dans un moteur électrique (En) connecté, que des contacts de signal (14) du dispositif de détection de codeur (2) sont amenés dans une boucle de flux de signal via au moins une ligne de raccordement comportant l'élément de codage (Kn) et qu'un seuil de coupure correspondant est réglé au moyen d'un comparateur (15).

2. Système (1) selon la revendication 1, **caractérisé en ce que** chaque moteur électrique (En) présente un câble de raccordement de moteur (20) avec une fiche de raccordement (21) à insérer dans le connecteur de dispositif (12) du dispositif de commande (10) et l'élément de codage (Kn) correspondant est intégré dans le câble de raccordement de moteur (20) ou dans la fiche de raccordement (21).

3. Système (1) selon la revendication 1 ou 2, **caractérisé en ce que** l'élément de codage (Kn) comprend ou est au moins un composant électrique.

4. Système (1) selon la revendication 3, **caractérisé en ce que** l'élément de codage (Kn) comprend au moins une résistance électrique ou est une résistance électrique.

5. Système (1) selon l'une quelconque des revendications précédentes, **caractérisé en ce que** le dispositif de détection de codeur (2) comprend un circuit d'évaluation électrique qui est conçu pour utiliser une limitation de courant spécifique au moteur en fonction du moteur électrique (En) connecté.

6. Système (1) selon l'une quelconque des revendications précédentes, **caractérisé en ce que** chaque moteur électrique (En) représente un moteur EC commutable par une commutation de l'électronique centrale (11).

7. Système (1) selon l'une quelconque des quelconque revendications précédentes, **caractérisé en ce que** chaque moteur électrique (En) connectable comme prévu est un entraînement intégré d'un appareil, notamment un ventilateur, une pompe, un compresseur ou un appareil de climatisation.

8. Système (1) selon l'une quelconque des revendications précédentes, **caractérisé en ce qu'**un dispositif de protection contre les surintensités du système constitué d'au moins l'électronique centrale (11) et d'un moteur électrique (En) est formé d'un circuit de protection principal et d'un circuit de protection secondaire, le circuit de protection principal comportant au moins un circuit d'évaluation pour évaluer un élément de codage (Kn ) et est réalisé dans l'électronique centrale (11), tandis que le circuit de protection secondaire est réalisé séparément dans le câble de raccordement de moteur ou dans une fiche de raccordement connecté à celui-ci, ayant un élément de codage (Kn).
